Europäisches Patentamt

European Patent Office

Office européen des brevets

(11) Publication number: **0 128 495**
**B1**

## EUROPEAN PATENT SPECIFICATION

(45) Date of publication of patent specification: **20.01.88**

(21) Application number: **84106341.5**

(22) Date of filing: **04.06.84**

(51) Int. Cl.⁴: **B 65 D 30/10, B 65 D 81/34, B 31 B 19/00, B 65 D 33/02**

(54) Improved plastic gussetted bag construction.

(30) Priority: **06.06.83 US 501236**

(43) Date of publication of application:
**19.12.84 Bulletin 84/51**

(45) Publication of the grant of the patent:
**20.01.88 Bulletin 88/03**

(84) Designated Contracting States:
**BE CH DE FR GB IT LI NL SE**

(56) References cited:
**EP-A-0 038 114**
**FR-A-1 568 974**
**FR-A-2 243 882**
**US-A-4 315 963**

(73) Proprietor: **THE DOW CHEMICAL COMPANY**
**2030 Dow Center Abbott Road P.O. Box 1967**
**Midland, MI 48640 (US)**

(72) Inventor: **Harrison, Dennis Berton**
**708 Wildes**
**Midland Michigan, 48640 (US)**
Inventor: **Torres, Antonio**
**1340 Patterson Road**
**Midland Michigan 48640 (US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

Courier Press, Leamington Spa, England.

# Description

With the advent of microwave ovens and frequent cooking in such ovens of foods taken directly from a freezer, it has been found desirable to have a thermoplastic container which not only can be compactly stored in the freezer, but which can also be used directly in the microwave oven when taken from the freezer. One such container is that shown in U.S. Patent 4,358,466 and EP—A—0038114 which comprises a flexible thermoplastic bag having two wing-shaped pouch portions with an upstanding neck portion or filling spout located thereabove. The pouch portions form a gusset, which portions are joined to the neck portion at its base. It has been found that when the wing portions are filled with product and carry a heavy load or during cooking where pressures build up in the bag, ruptures can occur at the gussetted area particularly where it is joined with the neck portion of the container. The purpose of this invention is to achieve an improved bag of the type shown in U.S. Patent 4,358,466 which minimizes or eliminates ruptures or breaks in the gussetted area.

This invention more particularly resides in an improved plastic gussetted bag design which exhibits increased bottom load bearing strength achieved by the critical location and incorporation of reinforcing means. The reinforcing means, which can comprise a thickened portion or reinforcing strip of a thermoplastic material, is generally located laterally along the bag bottom on the bag fold created by the gusset. The incorporation of the reinforcing means strengthens the bag bottom by spreading the stresses resulting from the bag contents across the reinforcing strip from the side seams of the bag. This spreading out of the load derived forces removes a major portion of the stresses on the side seal and juncture of the neck portion and wing sections of a bag which is typically found to be the weakest point of such gussetted bags. This is particularly true where more than one seam is joined at a point location.

More particularly, the invention resides in a container formed from a film of a thermoplastic material, said container having opposed wing sections extending from a generally central neck portion, said wing sections forming a gussetted container bottom having a fold line extending directly beneath the neck portion, the marginal edges of said wing sections and said neck portion being sealed, said neck portion being in open communication with said wing sections, the juncture of the marginal edges of the neck portion with said wing sections forming a tri-point juncture, and reinforcing means extending laterally along the length of said wing sections and along the fold line from one tri-point juncture at one marginal edge to an opposite tri-point juncture at the other marginal edge of the container.

The invention also resides in a process for forming a bag having a neck portion and adjacent opposed wing pouches, comprising the steps of providing thermoplastic film material for the bag having inner and outer skins of different heat-softening temperature responses, selecting the inner skin so as to have a lower heat-softening temperature than said outer skin, laying over two plies of said film against one another so that the inner skin abuts against itself and forms opposite sides and a bottom, gussetting the bottom of said film to the extent that the gussetted bottom forms the major portion of the bag, applying heat along opposite margins of said sides of a temperature above the softening temperature of said inner skin but below that of the outer skin, whereby sealing of the inner skin along said margins occurs without sealing of adjoining outer skin along the gussetted bottom of the bag, forming said wing pouches from the gussetted bottom immediately adjacent and below the neck portion with the opposed wing pouches being joined at their margins only and at their juncture with the base of the neck portion, said non-gussetted section forming the central neck portion in open communication with said wing pouches, characterized by providing a reinforcing means laterally along the gussetted bottom of the bag from one juncture to the other on opposite marginal sides of the bag.

By the process a thermoplastic container having a gussetted bottom with reinforcing means is formed. The process comprises the steps of forming a tri-point juncture at each of the marginal edges of the container and adding the reinforcing means to extend laterally along the central bottom of the container from one tri-point juncture to the other.

Figure 1 is an isometric view of a bag constructed according to the principles of the present invention with reinforcing means shown located laterally across the bag bottom on the bag fold created by the gussetted bottom; with optional additional reinforcing means shown in dotted lines;

Figure 2 is a bottom view of the bag shown in Figure 1;

Figure 3 is a side view of a bag constructed according to the teachings of U.S. Patent 4,358,466;

Figure 4 is a side view of the bag shown in Figure 1, and constructed in accordance with the principles of the present invention;

Figure 5 is a fragmentary isometric view of the filled bag of Figure 3 taken from the bottom thereof showing a typical rupture.

Flexible thermoplastic containers suitable for heavy duty usage such as those which might be used in freezers and in microwave ovens for the preserving and preparation of food need generally to be leakproof so that undesirable leakage of the food product does not occur either in the freezer when initially stored, or in the oven during cooking. The bottom ruptures are the most common and least acceptable of the bag failures, and it is towards such bottom failures that the present invention is primarily directed. However, other failures can be avoided by the practice of the invention, and use of additional reinforcing means where desirable.

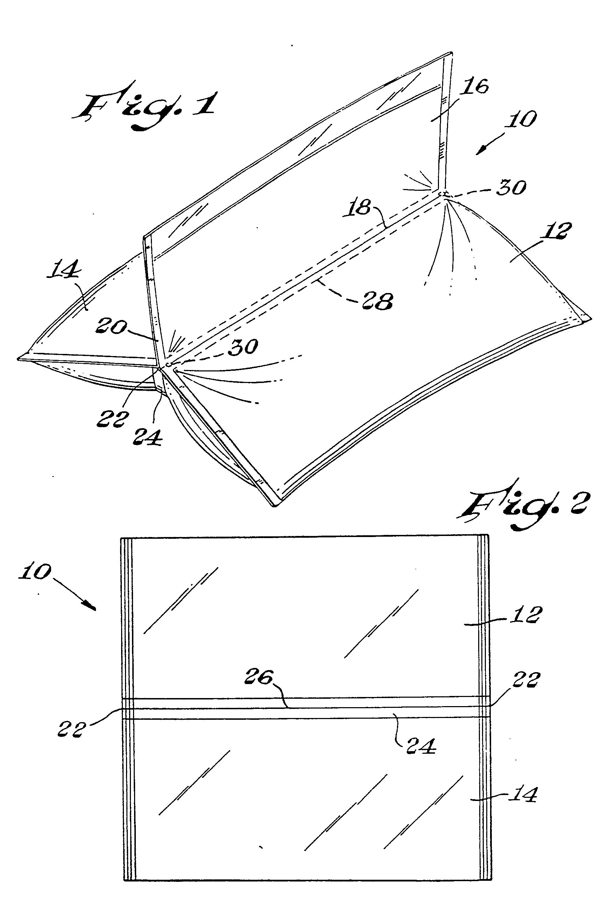

More specifically, there is shown in Figure 1, one embodiment of the present invention which comprises a storage and cooking bag 10 preferably formed of a thermoplastic film material or materials such as that described in U.S. Patent 4,358,466. Bag 10 comprises a pair of gussetted wing sections or pouches, 12 and 14, and a neck portion or spout 16. The wing sections are illustrated as being filled with a product (not shown) which causes the wing sections 12, 14 to be pillow-shaped, as illustrated. Preferably, no product is contained in the neck portion or spout 16, which extends generally upwardly from a fold line or juncture 18 between the wing sections 12, 14 and spout 16. Spout 16 is in open communication with the wing sections 12, 14 except at their lateral extremities where they are sealed to close the sides of the spout 16, as shown at 20, and at their tri-point juncture 22 with the wing sections. A reinforcing strip or means 24 extends from the juncture 22 along a bottom fold line 26 (shown in Figure 2) between the wing sections 12, 14.

An additional reinforcing strip or means 28 can be provided along the fold line 18 between the upright but foldable spout 16 and the wing sections 12 and 14, if found desirable, to avoid ruptures in the upper part of the bag, such as shown at 30, referred to as top gusset pin-holes. Such ruptures are found to occur occasionally despite the use of reinforcing strip 24 but would normally be eliminated by use of the additional reinforcing strip 28. The reinforcing strip 28 may be provided on the inside or the outside of the container or bag 10 to extend over the fold line 18 from one marginal side edge of the bag to the opposite side edge.

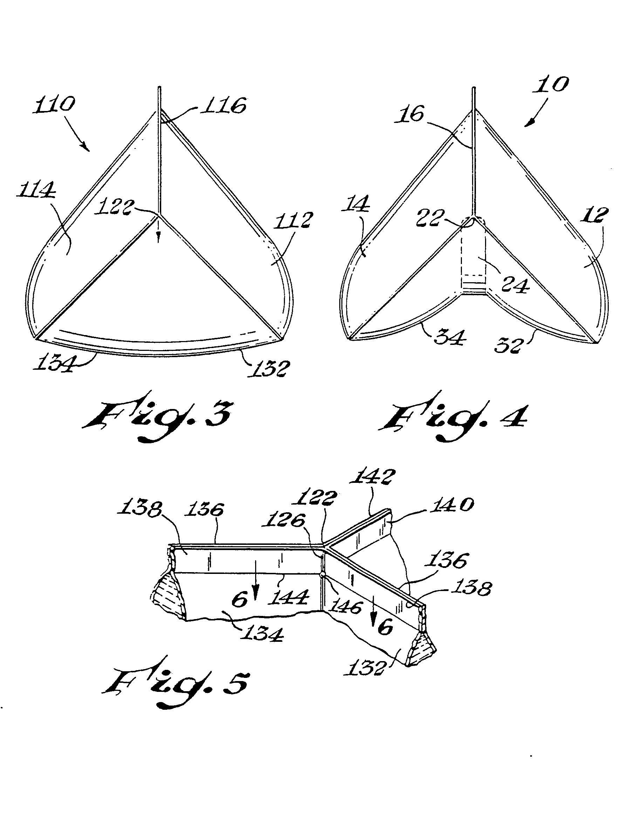

Figure 3 is an illustration of a prior art bag 110, constructed in accordance with the disclosure of U.S. Patent 4,358,466. Bag 110 includes an upright but foldable neck portion or spout 116, a pair of wing sections or pouches 112, 114, which are somewhat different in appearance from those shown in U.S. Patent 4,358,466 since they are not resting on a flat surface but are shown suspended in air so that the full weight of the product and distortion of the bottom of the bag is more fully illustrated. The spout 116 is joined to the wing sections 112, 114 at a tri-point juncture 122 and it is at this juncture that the full weight and bearing of the contents in the wing sections can cause problems of rupture and seal breakage. The difference which results from the use of the reinforcing means 24 in a similarly constructed bag which is also shown to be suspended while in a filled condition full is quite apparent from Figure 4 when compared with the prior art bag shown in Figure 3. The reinforcing means 24 acts as a reinforcing band to pull up and support the center of the wing shaped portions along the lateral fold line 26 in Figure 4 so as to distribute the stresses from the tripoint juncture 22 and throughout the bottom 32 and 34 of the wing sections 12, 14. The comparable bottom portions of the wing sections are shown in Figure 3 at 132 and 134 which can be seen to form a continuous curved section which would apply maximum stresses at the juncture 122 in the direction shown by the arrow in Figure 3, extending from the juncture 122 and downwardly. As shown in Figure 5, the layers 136 and 138 of a bag are sealed together at their margins and at the fold line juncture 126 to form, in effect, with the layers 140 and 142, a four-layer junction at tri-point juncture 122. It has been found that a tear or rupture is more likely to occur at the inner inside edge 144 of the seal (inside edge 144 of the sealed layers 136 and 138, at the fold line 126) as illustrated by pin hole 146, with the result that liquid or other product can escape from the pin hole. By use of the reinforcing band 24, as shown in Figure 4 such bottom gusset pin holes have been substantially eliminated in practical use of the bag.

The reinforcing means 24 can be formed in various ways but in this particular embodiment, the means is illustrated as a strip or band extending along the inside of surfaces 32 and 34 of wing sections 12 and 14 for the full length of fold line 26 and is sealed at the tri-point juncture 22 of the wing sections 12 and 14 and the spout 16. The reinforcing strip 24 was coextruded simultaneously with the multi-layer film forming the wing sections 12 and 14, and was of the same material as the innermost layer of said film, only thicker in dimension, so as to effect the reinforcement. If desired, a separate die port could be used in an extruder for forming the strip 24 of a different resin material, such as, for example, a stronger material than that used in forming the wing portions 12 and 14. The three-point juncture 22 will include four thicknesses of film material which have to be sealed together, plus the thickness of the reinforcing material. It is, therefore important that the seal be made properly at the juncture 22 and that undue stresses at that juncture be eliminated. The reinforcing strip 24 accomplishes such a purpose. The width and exact shape of the reinforcing strip can vary, depending on the degree of reinforcement needed but a strip generally such as that shown in Figure 4 is found desirable in that it provides sufficient width to act as a reinforcement and yet does not decrease the capacity of the bag to any significant degree or cause the contents to rise up too far in the bag.

A reinforcing means could also be a strip of material laminated to either the inside or the outside of the bag. It could be coextruded to the outside of the bag as well as the inside of the bag or it could be formed by preferential cooling of the fold line area during the initial cooling stage following extrusion, so that thickening of that portion of the bag during its cooling stage occurs more quickly to thereby provide a thickened reinforced zone, such as taught in U.S. Patent 4,315,963, for example. The spreading out of the load derived forces by the reinforcing strip removes the majority of the stress concentrated at the juncture 22 which is the anchor point of the gusset fold to the bag side seal which, as heretofore stated, is typically found to be the weakest point of plastic fabricated gussetted bags.

The net effect of incorporating a reinforcing means into a gussetted plastic bag construction is an increased load bearing capability of the gussetted bag for all thicknesses of plastic film used for the remainder of the bag construction. It has been found that this improvement can result in a multi-fold increase in actual load bearing capabilities. For example, bags such as shown in Figure 1, but without reinforcing strips 28, were filled with water, the bag having a capacity to carry 0.475 lit. (one pint) of water. Weights were put on the top of the bags until failure occurred or until a predetermined maximum weight was applied to the top of the bag when placed on a surface. Fifteen examples of the bags with loads varying from 24.3 kg (54 lbs.) to in excess of 54 kg (120 lbs.) found no failures in the bottom gusset, such as would be typified by the pin hole 146 in the prior art bag.

A similar test run on prior art bags (without the reinforcing means 24) using loads of from 2.7 kg—22.5 kg (6—50 lbs.) showed one hundred percent failures. That is, in every one of the 15 examples of the prior art bags, a tear or rupture, such as pin hole 146, was found.

A similar run was made with quart size bags made in accordance with the present invention containing 0.95 lit. (one quart) of liquid. Again in 15 test runs with the reinforcing band of this invention, there were no failures at the bottom gusset with loads of from 30.6—53.1 kg (68—118 lbs.); and of the 15 runs, there were five with no failures at all, and 10 with failures only in the top of the gusset, such as pin holes 30, which could be eliminated with a reinforcing means 28. A comparable set of 15 runs was made with prior art bags having no reinforcing means and with loads of from 4.05 to 26.55 kg (9 to 59 lbs.) resulting in the failure of each of the 15 bags in the bottom gusset area.

Bottom gusset failures are by far the more serious cause of bag failure because extensive leakage can occur without much pressure being applied and would then more frequently cause serious problems. Top gusset failures generally are troublesome only when excessive pressure is involved, and in many instances bags can perform satisfactorily even if a top gusset pin hole is found in the bag. It has been found that on the average, prior art 0.475 lit. (pint-sized) bags failed with about 9.9 kg (22 lbs.) of weight applied. No bottom gusset failures occurred in the bags of the present invention when an average of about 39.15 kg (87 lbs.) of weight was applied. The comparable numbers for the quart-sized bags were about 14.85 kg (33 lbs.) and about 38.25 kg (85 lbs.), respectively.

To further test the improvements of this invention, bags in accordance with this invention as well as prior art bags were subjected to extensive cooking tests. The tests were severe and represented abusive consumer end uses. The basic procedure followed in the testing included filling the bags with an appropriate food load for the bag size, there being no food in the neck area of the bag, stacking them in a freezer at approximately −17.8°C (0°F) and then removing them to be placed directly in a microwave oven for cooking. Samples were also tested without prefreezing, but there were no significant differences noted in the results. Several different food groups were tested, which were selected from food likely to be used by the consumer. These foods included (1) spaghetti sauce, a casserole-type dish high in water content with emulsified oil present; (2) beef stew, a meat dish high in protein and carbohydrates; and (3) sliced carrots, representing a vegetable dish in its own juice, a typical carbohydrate with extracted salts in solution. Sixteen or more samples were tested with the spaghetti sauce and in each case no bottom gusset pin holes were observed in the bags constructed according to the present invention. In the bags of the prior art, 91 percent had such pin holes. With the beef stew, there were no bottom gusset pin holes found in a test of some thirteen samples of bags constructed according to the present invention; although there was one with a top gusset pin hole. In four samples of prior art bags tested, 25 percent had bottom gusset pin holes. With the carrots there were no pin holes found in any of the bags using this invention. Comparable data for prior art bags was not obtained with carrots. There was some seepage at the seams in the spaghetti sauce and beef stew tests using bags of this invention, and with the spaghetti sauce for prior art bags, but this was related to the function of the sealing mechanism and not to the bottom strength of the bag affected by the reinforcing means, so are not here reported.

Except for the incorporation of a reinforcing means such as the band 24, the bags of the present invention used in the above tests were made essentially like those of U.S. Patent 4,358,466. Additional reinforcing strips such as the reinforcing means 28 herein described, were not used in such bags.

It is, of course, understood and appreciated that various modifications of this invention can be made and still be comprehended within the scope of the present claims. The principles of the invention are not necessarily limited to a particular size or shape of bag and in many cases the materials of construction can be varied without affecting the concepts of the present invention. The closure can be varied and the products contained in the improved bag need not always be food products. Various other modifications obvious to those skilled in the art can be made to the embodiments herein disclosed and yet remain within the concept of the present invention.

**Claims**

1. A container (10) formed from a film of a thermoplastic material, said container (10) having opposed wing sections (12, 14) extending from a generally central neck portion (16), said wing sections (12, 14) forming a gussetted container bottom having a fold line (18) extending directly beneath the neck portion (16), the marginal edges of said wing sections (12, 14) and said neck portion (16) being sealed, said neck portion (16) being in open communication with said wing sections (12, 14), the juncture of the marginal edges of the neck portion (16) with said wing sections (12, 14) forming a tri-point juncture (22), and reinforcing means (24) extending laterally along the length of said wing sections (12, 14) and along the fold line (18) from one tri-point juncture (22) at one marginal edge to an opposite tri-point juncture (22) at the other marginal edge of the container (10).

2. The container of claim 1 wherein the reinforcing means comprises a strip (24) located on the inside surface of the container bottom.

3. The container of claim 1 wherein the reinforcing means comprises a strip (24) located on the outside surface of the container bottom.

4. The container of claims 2 or 3 wherein the reinforcing means (24) is integrally formed with the film comprising the bottom of the container.

5. The container of claim 1 including additional reinforcing means (28) extending laterally along the length of the bag (10) at the base of the central neck portion (16) and a surface of the gussetted wing sections (12, 14).

6. A process for forming a bag (10) having a neck portion (16) and adjacent opposed wing pouches (12, 14), comprising the steps of providing thermoplastic film material for the bag having inner and outer skins of different heat-softening temperature responses, selecting the inner skin so as to have a lower heat-softening temperature than said outer skin, laying over two plies of said film against one another so that the inner skin abuts against itself and forms opposite sides and a bottom, gussetting the bottom of said film to the extent that the gussetted bottom forms the major portion of the bag, applying heat along opposite margins of said sides of a temperature above the softening temperature of said inner skin but below that of the outer skin, whereby sealing of the inner skin along said margins occurs without sealing of adjoining outer skin along the gussetted bottom of the bag, forming said wing pouches (12, 14) from the gussetted bottom immediately adjacent and below the neck portion (16) with the opposed wing pouches being joined at their margins only and at their juncture (22) with the base of the neck portion, said non-gussetted section forming the central neck portion in open communication with said wing pouches, characterized by providing a reinforcing means (24) laterally along the gussetted bottom of the bag from one juncture (22) to the other on opposite marginal sides of the bag.

7. The process of Claim 6 wherein said reinforcing means (24) is joined to the container bottom by lamination to either the inside or outside surface of the container bottom.

8. The process of Claim 6 or 7 wherein said reinforcing means (24) is joined to either the inside or outside surface of the container bottom by coextrusion of the reinforcing means (24) with the thermoplastic material forming the rest of the container.

9. The process of Claim 6 or 7 wherein said reinforcing means (24) is formed along said container bottom by cooling the container laterally across the bottom at a rate faster than that employed for cooling the rest of the container directly following its extrusion.

10. The process of Claim 6, including the step of providing a reinforcement means (28) to extend laterally along the length of the bag (10) at the base of the central neck portion (16) and a surface of the gussetted wing sections (12, 14).

**Patentansprüche**

1. Behälter (10) aus einer Folie eines thermoplastischen Materials, wobei der Behälter (10) einander gegenüberliegende Flügelabschnitte (12, 14) aufweist, die sich von einem allgemeinen zentralen Ansatzteil (16) aus erstrecken, die Flügelabschnitte (12, 14) einen gefalteten Behälterboden bilden mit einer Faltlinie (18), die sich unmittelbar neben dem Ansatzteil (16) erstreckt, die Randkanten der Flügelabschnitte (12, 14) und des Ansatzteils (16) verschweißt sind, das Ansatzteil (16) in offener Verbindung mit den Flügelabschnitten (12, 14) steht, die Verbindungsstelle oder Randkanten des Ansatzteil (16) mit den Flügelabschnitten (12, 14) eine Dreipunktverbindung (22) ist und Verstärkungen (24) sich quer entlang der Länge der Flügelabschnitte (12, 14) und entlang der Faltlinie (18) von einer Dreipunktverbindung (22) an einer Randkante zur gegenüberliegenden Dreipunktverbindung (22) an der anderen Randkante des Behälters erstrecken.

2. Behälter nach Anspruch 1, dadurch gekennzeichnet, daß die Verstärkung ein auf der Innenoberfläche des Behälterbodens angeordneter Streifen (24) ist.

3. Behälter nach Anspruch 1, dadurch gekennzeichnet, daß die Verstärkung ein auf der Außenseite des Behälterbodens angeordneter Streifen (24) ist.

4. Behälter nach Ansprüchen 2 oder 3, dadurch gekennzeichnet, daß die Verstärkungen (24) zusammen mit der Folie, die den Boden des Behälters bildet, hergestellt werden.

5. Behälter nach Anspruch 1, dadurch gekennzeichnet, daß weitere Verstärkungen (28) vorhanden sind, die sich quer entlang der Länge des Beutels (10) an der Basis des zentralen Ansatzteils (16) und einer Oberfläche der gefalteten Flügelabschnitte (12, 14) erstrecken.

6. Verfahren zum Ausbilden eines Beutels (10) mit einem Ansatzteil (16) und benachbarten, einander gegenüberliegenden Flügeltaschen (12, 14) enthaltend die Schritte: Bereitstellen eines thermoplastischen Folienmaterials für den Beutel mit inneren und äußeren Oberflächenschichten mit unterschiedlicher Erweichungstemperatur, Auswählen einer niedrigeren Erweichungstemperatur für die innere Oberflächenschicht als die der äußeren Oberflächenschicht, Aufeinanderlegen von zwei Lagen der Folie, so daß die inneren Oberflächenschichten mit sich selbst in Berührung stehen und einander gegenüberliegende Seiten und einen Boden ausbilden Falten des Bodens der Folie bis der gefaltete Boden den Hauptteil des Beutels bildet, Aufbringen von Wärme entlang einander gegenüberliegenden Außenkanten der Seiten auf eine Temperatur, die oberhalb der Erweichungstemperatur der inneren Oberflächenschicht, jedoch unter der der äußeren Oberfläche schicht liegt, so daß die inneren Oberflächenschichten entlang ihrer Kanten verschweißt werden, ohne daß die benachbarten äußeren Oberflächenschichten entlang des gefalteten Bodens Beutels verschweißt werden, Ausbilden der Flügeltaschen (12, 14) aus dem gefalteten Boden unmittelbar neben und unter dem Ansatzteil (16), wobei die einander gegenüberliegenden Flügeltaschen nur entlang ihrer Ränder und an ihrer Verbindung (22) mit der Basis des Ansatzteils verbunden werden, und die nicht gefalteten Teile, die das zentrale Ansatzteil bilden, in offener Verbindung mit den Flügeltaschen stehen, gekennzeichnet durch Anbringen von Verstärkungen (24) entlang des gefalteten Boden des Beutels von einer Verbindung (22) zu den anderen gegenüberliegenden Randseiten des Beutels.

7. Verfahren nach Anspruch 6, dadurch gekennzeichnet, daß die Verstärkungen (24) mit dem Behälterboden durch Laminieren entweder auf die innere oder äußere Oberfläche des Behälterbodens verbunden werden.

8. Verfahren nach Ansprüchen 6 oder 7, dadurch gekennzeichnet, daß die Verstärkungen (24) entweder mit der inneren oder äußeren Oberfläche des Behälterbodens durch Koextrusion der Verstärkungen (24) mit dem thermoplastischen Material, das den übrigen Behälter bildet, verbunden werden.

9. Verfahren nach Anspruch 6 oder 7, dadurch gekennzeichnet, daß die Verstärkungen (24) entlang des Behälterbodens durch Kühlen des Behälters quer über den Boden mit einer Geschwindigkeit, die größer ist als die Kühlung des restlichen Behälters, direkt im Anschluß an seine Extrusion gebildet werden.

10. Verfahren nach Anspruch 6, gekennzeichnet durch den Schritt des Anbringens von Verstärkungen (28), die sich quer entlang der Länge des Beutels (10) an der Basis des zentralen Ansatzteils (16) und einer Oberfläche der gefalteten Flügelteile (12, 14) erstrecken.

**Revendications**

1. Récipient (10) formé à partir d'un film de matière thermoplastique, ledit récipient (10) ayant des ailes opposées (12, 14) s'étendant depuis une partie formant col (16) sensiblement centrale, lesdites ailes (12, 14) formant un fond de récipient en forme de gousset ayant une ligne de pliure (18) qui s'étend directement sous la partie formant col (16), les bords marginaux des ailes (12, 14) et de la partie formant col (16) étant scellés ladite partie formant col (16) communiquant librement avec les ailes (12, 14), la jonction des bords marginaux de la partie formant col avec les ailes (12, 14) formant une jonction (22) à trois points, et un moyen de renforcement (24) s'étendant latéralement le long des ailes (12, 14) et le long de la ligne de pliure (18) depuis une jonction à trois points (22) sur un bord marginal jusqu'à une jonction à trois points (22) opposées sur l'autre bord marginal du récipient (10).

2. Récipient selon la revendication 1, dans lequel le moyen de renforcement comporte une bande (24) située sur la surface interne du fond du récipient.

3. Récipient selon la revendication 1, dans lequel le moyen de renforcement comporte une bande (24) située sur la surface extérieure du fond du récipient.

4. Récipient selon la revendication 2 ou 3, dans lequel le moyen de renforcement (24) fait corps avec le film constituant le fond du récipient.

5. Récipient selon la revendication 1 comprenant un moyen de renforcement supplémentaire (28) s'étendant latéralement le long du sac (10) à la base de la partie centrale formant col (16) et d'une surface des ailes (12, 14) en goussets.

6. Procédé de fabrication d'un sac (10) ayant une partie format col (16) et des poches formant ailes (12, 14) opposées adjacentes, comportant les opérations de réalisation d'une matière formant un film thermoplastique pour le sac ayant des surfaces intérieure et extérieure qui réagissant différemment à une température de ramollissement thermique, de choix de la surface intérieure afin qu'elle ait une température de ramollissement thermique inférieure à celle de la surface extérieure, de superposition de deux épaisseurs dudit film l'une contre l'autre de façon que la surface intérieure bute contre elle-même et forme des côtés opposés et un fond, de formation en gousset du fond dudit film de telle manière que le fond en gousset forme la majeure partie du sac, d'application de chaleur le long des marges opposées des deux côtés à une température supérieure à la température de ramollissement de ladite surface intérieure mais inférieure à celle de la surface extérieure, grâce à quoi le collage de la surface intérieure le long desdites marges se produit sans collage de la surface extérieure contiguë le long du fond en gousset du sac, de formation desdites poches formant ailes (12, 14) depuis le fond en gousset immédiatement adjacent et sous la partie formant col (16), les poches opposées formant ailes n'étant jointes que sur leurs marges et à leur jonction (22) avec la base de la partie formant col, ladite partie non en gousset formant le col central en libre communication avec lesdites poches formant ailes, caractérisé par la présence d'un moyen de renforcement (24) latéralement le long du fond en gousset du sac depuis une jonction (22) jusqu'à l'autre sur les bords marginaux opposés du sac.

7. Procédé selon la revendication 6, dans lequel ledit moyen de renforcement (24) est assemblé avec le fond du récipient par stratification avec la surface intérieure ou la surface extérieure du fond du récipient.

8. Procédé selon la revendication 6 ou 7, dans lequel le moyen de renforcement (24) est assemblé avec la surface intérieure ou la surface extérieure du fond du récipient par coextrusion du moyen de renforcement (24) avec la matière thermoplastique formant le reste du récipient.

9. Procédé selon la revendication 6 ou 7, dans lequel ledit moyen de renforcement (24) est formé le long du fond du récipient en refroidissant le récipient latéralement en travers du fond à une vitesse plus rapide que celle employée pour refroidir le reste du récipient directement à la suite de son extrusion.

10. Procédé selon la revendication 6, comprenant l'opération de réalisation d'un moyen de renforcement (28) pour qu'il s'étende latéralement le long du sac (10) à la base de la partie centrale formant col (16) et d'une surface des ailes (12, 14) en gousset.

Fig. 1

Fig. 2

1

Fig.3

Fig.4

Fig.5